# EUROPEAN PATENT SPECIFICATION

(11) **EP 4 251 463 B1**
(45) Date of publication and mention of the grant of the patent: **22.04.2026**
(21) Application number: 21810439.6
(22) Date of filing: 16.11.2021
(51) Int. Cl.: B60L 53/62, B60L 53/65

(54) **METHOD AND DEVICE FOR IDENTIFICATION OF A SUPPLY EQUIPMENT ADAPTED TO CHARGE AN ELECTRIC VEHICLE**
VERFAHREN UND VORRICHTUNG ZUR IDENTIFIZIERUNG EINER VERSORGUNGSAUSRÜSTUNG ZUM LADEN EINES ELEKTROFAHRZEUGS
PROCÉDÉ ET DISPOSITIF D'IDENTIFICATION D'UN ÉQUIPEMENT D'ALIMENTATION ADAPTÉ POUR CHARGER UN VÉHICULE ÉLECTRIQUE

(30) Priority: 30.11.2020 IT 202000029117
(43) Date of publication of application: 04.10.2023
(73) Proprietor: Università degli Studi di Padova, 35122 Padova (IT)
(72) Inventor: CONTI, Mauro, 050026 Montecastrilli (TR) (IT); DONADEL, Denis, 32035 Santa Giustina (BL) (IT); TURRIN, Federico, 33084 Cordenos (PN) (IT)
(74) Representative: Metroconsult Srl
(86) International application number: PCT/IB2021/060589
(87) International publication number: WO 2022/112898

(56) References cited:
- US-A1- 2020 233 956
- US-A1- 2020 282 854

## Description

The present invention is related to a method for identification of a supply equipment adapted to charge an electric vehicle, in accordance with the preamble of claim 1. In particular, it is disclosed a method for identification of a supply equipment adapted to charge an electric vehicle and a corresponding device.

The present invention is usable in the context of systems for charging batteries of Electric Vehicles (EVs) or hybrid vehicles with the possibility to be charged by such systems. The charging systems may be, for example, charging stations comprising two or more supply equipments, such as electric charging stations, also known as Electric Vehicle Supply Equipments (EVSEs). In order to be charged, an electric or hybrid vehicle is connected to a supply equipment until the process of charging is completed. Recently, some studies have highlighted the possibility of being able to transfer energy from the batteries of an electric vehicle to the grid, according to the V2G (Vehicle To Grid) paradigm, allowing the intelligent exchange of energy from the electric batteries of electric or hybrid vehicles with the grid. To this end, the connection between the electric vehicle and the supply equipment is not limited to the transfer of energy, but also allows the transfer of information such as charge parameters, schedules of charges in time and parameters for economic transactions related to the energy flows exchanged between the electric vehicle and the charging system. An enabling protocol for V2G applications is ISO/IEC-15118, standardized in 2013. This standard defines the communication between the electric vehicle and the supply equipment through the technique known as PLC (Power Line Communication), using the Control Pilot (CP pin) and the Ground electrode (Ground pin) of the SAE-J1772 standardized connector. The ISO/IEC 15118 standard uses IPv6 protocol with TCP encrypted according to the TLS (Transport Layer Security) protocol.

The present invention is particularly useful for charging systems in accordance with the V2G paradigm, in particular for securing such systems from relay-type attacks, also known as relay attacks, during the process of charging of the electric or hybrid vehicle. An example may be an EVExchange attack, i.e., a relay-type attack that may be used to illegally steal power from an electric or hybrid vehicle during the process of charging of the electric or hybrid vehicle.

Currently, there are charging systems that address safety in terms of malfunctions or other physical problems (safety) but there are no charging systems that protect against cyber attacks (security). For example, US patent US8655553B2 describes a monitoring system for an electric vehicle and a supply equipment structured to communicate with the electric vehicle. Such a monitoring system allows to monitor communication and energy, or current flow between the electric vehicle and the supply equipment: the monitored data is stored in a memory unit. The solution shown by this patent allows to perform a diagnosis of the supply equipment in order to verify possible problems related to potential malfunctions of the system (safety).

US2020/282854A1 provides for a system to protect an electric vehicle charging infrastructure. An electric vehicle charging site may receive Alternating Current ("AC") power from a power grid and provides Direct Current ("DC") power to electric vehicles. A sensor spoof observer and controller may receive information from at least two AC current sensors, wherein the observer calculates a grid voltage disturbance using a structure based on an AC filter dynamic model. A system stability assurance platform may: (i) monitor current and voltage to detect resonance, (ii) identify impedance associated with a detected resonance, and (iii) apply a result of an analysis of the identified impedance to an adaptive damping control algorithm. A user interface platform may then provide information about a component of the charging infrastructure being cyber-attacked to a distribution system operator via a graphical user interface display.

US2020/233956A1 provides for a system to protect an electric vehicle charging infrastructure. An electric vehicle charging site may receive AC power from a power grid and provide DC power to electric vehicles. The charging site may include a plurality of monitoring nodes each generating a series of current monitoring node values over time that represent a current operation of the electric vehicle charging infrastructure. A supply equipment communication controller may receive an access request from an access requestor associated with an electric vehicle, the access request being associated with a platform certificate. A secondary actor policy decision point at the charging site may evaluate the access requestor's identity and respond with an action message allowing high-level communication with the access requestor to proceed. Information associated with the current monitoring node values and/or the access request may be stored in a secure, distributed transaction ledger (e.g., an attestation blockchain).

The currently known systems have a number of drawbacks which are explained below.

A first drawback is due to the fact that current charging systems do not prevent relay-type attacks that can be used to illegally steal power from an electric or hybrid vehicle while charging the vehicle.

A second drawback derives from the fact that current charging systems, even if implementing encrypted protocols, do not allow protection from cyber attacks, such as relay attacks.

Another drawback of known charging systems is due to the fact that these systems implement consolidated protocols that are difficult to modify and adapt to handle cyber attacks, such as relay attacks.

Therefore, the purpose of the present invention is to solve these and other problems of the state of the art, and in particular to disclose a method for identification of a supply equipment adapted to charge an electric vehicle together with the corresponding device, to increase the security of charging systems from cyber attacks, such as relay attacks.

An additional purpose of the present invention is to disclose a method for identification of a supply equipment adapted to charge an electric vehicle, and the corresponding device, to protect charging of the vehicle from cyber attacks even without the use of encrypted communication.

Another purpose of the present invention is to disclose a method for identification of a supply equipment adapted to charge an electric vehicle and the corresponding device, to protect charging of the vehicle from cyber attacks that can be easily used by charging systems using different communication protocols between the electric vehicle and the charging system.

An additional scope of the present invention is to disclose a method for identification of a supply equipment adapted to charge an electric vehicle, and the related device, to protect the charging of the vehicle from cyber attacks that does not require changing the communication protocol between the electric vehicle and the supply equipment.

**In** a nutshell, the invention described in the following comprises a method for identification of a supply equipment adapted to charge an electric vehicle, and the corresponding device, for verifying the security of the connection to the supply equipment by profiling the charging device.

Further advantageous features of this invention are the subject of the united claims which form an integral part of this description.

The invention will be described in detail in the following by means of non-limiting examples of embodiments with particular reference to the appended figures, wherein:
- Figure 1 schematically represents a supply equipment for electric or hybrid vehicles including at least two charging devices;
- Figure 2a and Figure 2b schematically exemplify a relay type attack implemented in the supply equipment of Figure 1;
- Figure 3 represents an exemplary block diagram of a device, shown in Figure 2b, for identification of a supply equipment adapted to charge an electric vehicle, in accordance with one embodiment of the present invention;
- Figure 4 represents an exemplary flowchart of a method for identification of a supply equipment adapted to charge an electric vehicle, in accordance with the present embodiment of the invention.

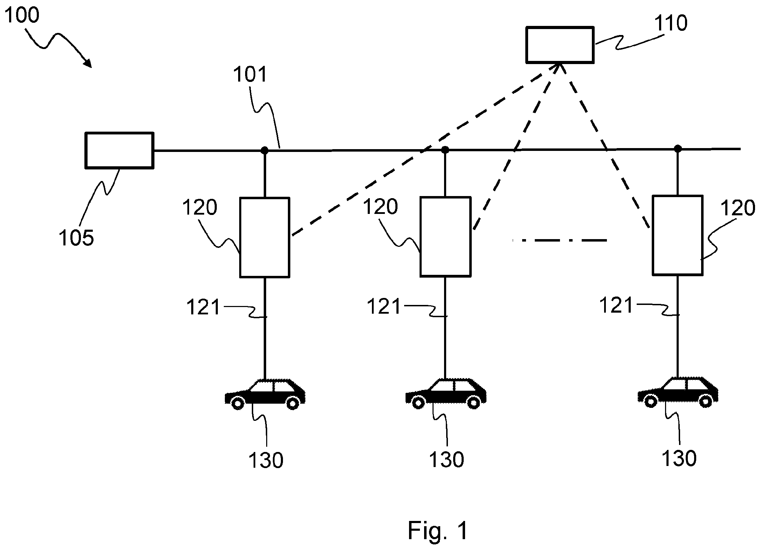

Figure 1 schematically represents a supply equipment 100 for charging two or more electric vehicles 130. Results clear that, to the person expert in this field, hybrid vehicles, i.e., having an internal combustion engine and an electric motor powered by batteries such that they can be recharged by the supply equipment 100, are included in the scope of the invention and will also be referred to hereinafter as electric vehicles 130. The supply equipment 100 may comprise at least two charging devices 120 operatively connected to an electrical network 101 that distributes electrical energy from a cabin 105 controlled by a provider of electricity.

The supply equipment 100 may comprise a remote server 110 suitable for communicating with each of the charging device 120 and/or at least one of the electric vehicles 130, such as via a wireless connection like WiFi, GSM, UMTS, LTE, and 5G connection. In an embodiment of the invention, the remote server 110 may comprise a memory, an input/output interface, a communication module, and a processor operatively connected to each other. The memory of the remote server 110 is adapted to store within the instructions and information for managing the supply equipment 100. The remote server input/output interface 110 allows for interfacing or connecting, an administrator user to manage and configure the remote server 110. The remote server input/output interface 110 may include, for example, a keyboard, a screen, a network card, and so forth. The remote server communication module 110 enables communication with at least one charging device 120 and/or other devices, such as a smartphone of a user, an electric vehicle 130, and so on. The remote server communication module 110 may include, for example, an Ethernet interface, a WiFi interface, a mobile network interface (GSM, UMTS, LTE, 5G), and so on. In another embodiment of the invention, all of the operations performed by the remote server 110 may be obtained from a plurality of processors operatively connected on a geographically distributed computer network. The remote server 110 and the cabin 105 may be connected to the Internet network via a wireless and/or wired network infrastructure according to the V2G systems paradigm.

The charging device 120 may be located at a specific area such as, for example, a large parking lot used for parking electric vehicles 130, in this way the supply equipment 100 realizes, for example, a charging station with several dozen supply equipment 120, i.e., a large charging station. Alternatively, the supply equipment 120 may be distributed over a large area such as an urban area, a neighbourhood, and so on. In such a case, the supply equipment 120 may be subdivided into small groups, for example of four or five supply equipment 120, thereby forming small charging stations distributed throughout the considered area.

Each supply equipment 120 is adapted to charge an electric vehicle 130, that is, the supply equipment 120 is suited to be operatively connected to the electric vehicle 130 so as to be able to exchange energy and information with the electric vehicle 130. The energy exchange may be from the grid 101 to the electric vehicle 130 or vice versa.

The supply equipment 120 may include electrical and/or electronic and/or electromechanical components, such as inverters, contactors, circuit breakers, adapters, and so on, that enable the exchange of electrical energy from the grid 101 to the electric vehicle 130. The supply equipment 120 may further include a control unit, such as a mini-pc, suitable for controlling all functions of the supply equipment 120 itself. The control unit of the supply equipment 120 may be operatively connected to a communication unit, such as a wireless interface of the WiFi or LTE or 5G type, to communicate with the remote server 110. The supply equipment 120 may comprise a location unit for outdoor environments, such as a GPS module, or the supply equipment 120 may comprise a location for indoor environments, such as a VLC (Visible Light Communication) module.

The supply equipment 120 is adapted to be operatively connected to the electric vehicle 130 via connection 121, that may be a wired connection or a wireless connection. Said connection 121 allows for the exchange of electrical energy and information between the supply equipment 120 and the electric vehicle 130. For example, in case the connection 121 is wired, the connection 121 may be implemented in accordance with CHAdeMO, IEC61851 or ISO/IEC-15118 specifications. On the other hand, in the case where the connection 121 is wireless, the connection 121 may be implemented in accordance with SAE-J2954 and SAE-J2847/6 specifications. It will be clear to the skilled person in the art that two or more supply equipment 120 may be housed in a structure suitable to contain and protect them, such as a column, so as to realize a charging station.

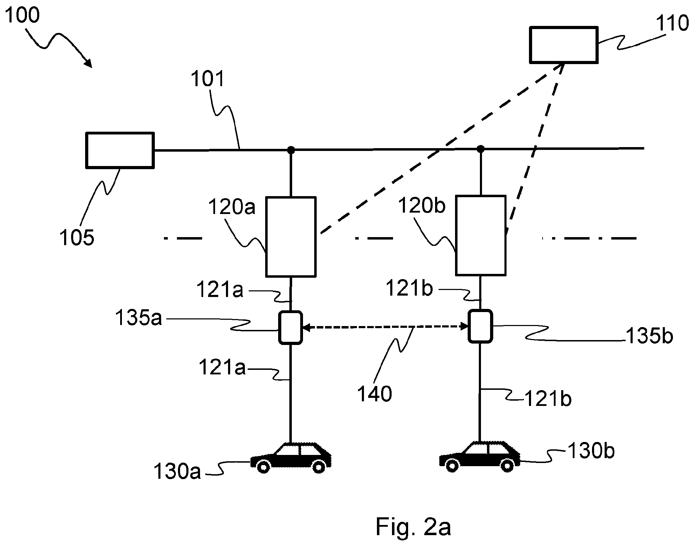

Figure 2a schematically exemplifies the supply equipment 100, wherein an attacking user implements a relay attack, in particular an EVExchange attack, against another user. This attack comprises performing a communication flow exchange between a first vehicle 130a, i.e., the victim user's vehicle, with a second vehicle 130b, i.e., the attacking user's vehicle, allowing the attacking user to impersonate the victim user during the process of charging of the first vehicle 130a by enabling the attacking user to charge the second vehicle 130b at the victim user's expense.

For example, Figure 2a shows a first supply equipment 120a operatively connected to the first vehicle 130a via a first connection 121a and a second supply equipment 120b operatively connected to the second vehicle 130b via a second connection 121b. In this example, both the first connection 121a and the second connection 121b of a wired type are considered, which may independently employ Type-1 and Type-2 connectors for alternating current (AC) electric vehicles or, may employ Combo-1 and Combo-2 connectors for direct current (DC) electric vehicles. The communication between the first supply equipment 120a and the first vehicle 130a and the communication between the second supply equipment 120b and the second vehicle 130b take place, for example, according to the ISO/IEC-15118 specification that allows a Plug-n-Charge mechanism, that is, a mechanism that allows an automatic authentication of users, for example enabling them to charge their electric vehicles by automatically accounting for the cost, that is without adopting further authentication processes, for example, with credit or debit cards.

To implement the EVExchange relay attack, the attacking user may use a first communication device 135a and a second communication device 135b that, for example, may be implemented using a Raspberry-PI micro-pc. In addition, the first communication device 135a and the second communication device 135b may communicate with each other via a third connection 140, such as a connection according to the IEEE 802.11n/ac Wi-Fi standard, such that the connection speed is greater than or equal to that of the first connection 121a and the second connection 121b. In particular, the first communication device 135a is operatively connected between the first supply equipment 120a and the first vehicle 130a, for example by cutting and reconnecting the cables carrying the communication signals (CP and Ground) of the first connection 121a, or by using a specific connector. Similarly, the second communication device 135b is operatively connected between the second supply equipment 120b and the second vehicle 130b, for example by cutting and reconnecting the cables carrying the communication signals (CP and Ground) of the second connection 121b, or by using a specific connector. The first communication device 135a is suitable for intercepting and blocking communications in progress along the first connection 121a and redirecting them through the third connection 140 to the second communication device 135b. Similarly, the second communication device 135b is adapted to intercept and block communications in progress along the second connection 121b and to redirect them through the third connection 140 to the first communication device 135a. Clearly, the attacking user will need to ensure that the first communication device 135a and the second communication device 135b are not easily detectable by the unsuspecting user of the attack.

The EVExchange relay attack can be implemented, for example, according to the following steps.
1) The attacking user connects the second vehicle 130b to the second supply equipment 120b. During this step, the second communication device 135b blocks authentication of the second vehicle 130b with the second supply equipment 120b, and waits to receive information from the first communication device 135a, via the third connection 140.
2) The user connects the first vehicle 130a to the first supply equipment 120a. During this step, the first communication device 135a blocks authentication of the first vehicle 130a with the first supply equipment 120a, and alerts the second communication device 135b, through the third connection 140, that the first vehicle 130a has been connected to the first supply equipment 120a.
3) The first communication device 135a and the second communication device 135b exchange information flow, via the third connection 140, such that the first vehicle 130a operates with the second supply equipment 120b exchanging electrical energy with the second vehicle 130b and, conversely, the second vehicle 130b operates with the first supply equipment 120a exchanging electrical energy with the first vehicle 130a.
4) The first vehicle 130a and the second vehicle 130b simultaneously begin charging procedures by authenticating to the second supply equipment 120b and the first supply equipment 120a, respectively. Accordingly, the second supply equipment 120b begins charging the second vehicle 130b according to instructions received from the first vehicle 130a, and the first supply equipment 120a begins charging the first vehicle 130a according to instructions received from the second vehicle 130b.
5) After a predetermined time interval large enough to ensure that the user has moved away from the first supply equipment 120a, the attacking user may interrupt the process of charging of the first alley 130a by continuing to charge the second vehicle 130b at the expense of the user previously authenticated to the second supply equipment 120b. Further, during this step, the attacking user may reverse the process of charging of the first vehicle 130a, i.e., the attacking user may discharge the battery of the first vehicle 130a by feeding electricity into the network 101 through the first supply equipment 120a. Consequently, the attacking user would also be economically remunerated for supplying energy to the grid 101 through the first supply equipment 120a, to which it has previously authenticated itself, to the detriment of the battery of the first vehicle 130a.

Potentially, the attacking user may use labels to physically swap the identity of the first supply equipment 120a with the second supply equipment 120b, so as not to allow the user to recognize the swapping of the same supply equipment 120a and 120b. It is clear to the skilled person in the art that such an attack can be carried out even if the communications between the first supply equipment 120a and the second supply equipment 120b respectively with the attacked vehicle 130a and the second vehicle 130b are encrypted, in fact the first communication device 135a and the second communication device 135b simply exchange the communications between the first vehicle 130a and the second vehicle 130b without having to access the content of the information itself.

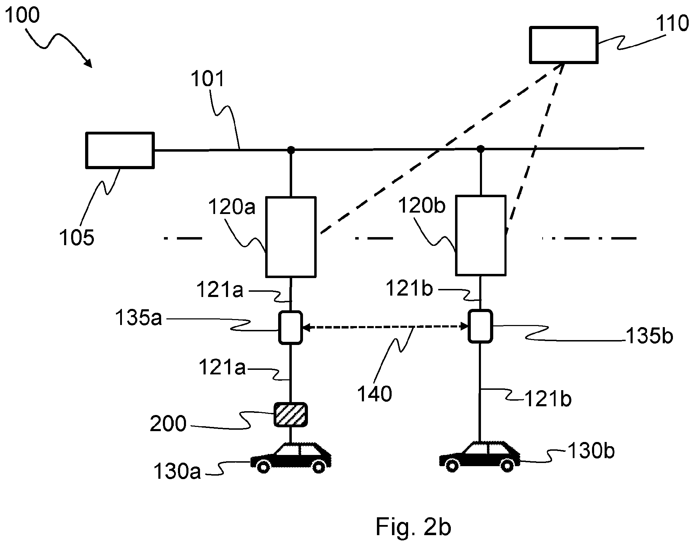

Figure 2b schematically exemplifies the same attachment described with reference to Figure 2a, wherein a device 200 is used for identification of a supply equipment 120 capable of charging an electric vehicle 130, in accordance with the present embodiment of the invention. With reference to Figure 2b, said device 200 is operatively connected to the first supply equipment 120a and the first vehicle 130a, so as to access the power and communication signals passing through the first connection 121a. In accordance with the present invention, the first charging device 120a is identified by combining several techniques for profiling specific physical properties of the first charging device 120a itself, such as charger type, distributed voltage and current, the duration of state changes, inter-packet times, and clock deviations. Further, to increase accuracy, additional information may also be used by performing the comparison between energy received and expected from the first vehicle 130a and information obtained from the use of satellite navigation systems. The device 200 allows the user to uniquely identify the first supply equipment 120a connected to the first vehicle 130a, in this way the user can be appropriately alerted by the device 200 in the event that, as a result of the relay attack, the supply equipment 120a is not correctly identified.

According to the present invention, the profiling of the first supply equipment 120a, or in general of each supply equipment 120, is based on the characterization of some properties of the supply equipment 120 itself, in order to uniquely identify it. In accordance with the present invention, this characterization is done by considering one or more of the following properties of the supply equipment 120: 1) at least one charge level of the supply equipment 120, 2) imperfections in the distributed voltage and current values of the supply equipment 120, 3) duration of state transitions of the supply equipment 120, 4) time intervals between transmitted or received packets of the supply equipment 120, 5) time lag of at least one clock of the supply equipment 120.

In particular, each supply equipment 120 may be constructed in accordance with different charging technologies that may be based on direct or alternating currents, subdivided into charging levels. Each charging level is characterized by specific values of currents and electrical voltages, such as level 1 (120Vac-12/15A) or level 2 (240Vac-80A). The profiling of the charge 120 may therefore be performed by measuring at least one voltage value corresponding to a charge level of the supply equipment 120 and/or at least one current value corresponding to the charge level of the supply equipment 120. Accordingly, measuring at least one voltage value corresponding to a charging level of the supply equipment 120 and/or at least one current value corresponding to the charging level of the supply equipment 120 allows the supply equipment 120 to be characterized, i.e., profiled and thus identified.

In addition to or as an alternative to the foregoing values, the profiling of the supply equipment 120 may be performed by measuring at least one voltage value outputted by the supply equipment 120 and/or at least one current value outputted by the supply equipment 120. The values of currents and voltages outputted by the supply equipment 120 include imperfections, i.e., deviations from the nominal values of currents and voltages, due to fluctuations in the electrical characteristics of components, such as power transistors, diodes, triacs, and so forth, that comprise the supply equipment 120. Accordingly, measurement of at least one voltage value outputted by the supply equipment 120 and/or at least one current value outputted by the supply equipment 120 allow the supply equipment 120 to be characterized, i.e., profiled and thus identified.

In addition to or as an alternative to the preceding values, the profiling of the supply equipment 120 may be performed by measuring at least one time value expressing the duration of the state transitions of the supply equipment 120. Indeed, such time intervals depend on the constructional features of each supply equipment 120, such as the electrical components used and/or by the implementation of control processes of the supply equipment 120 itself. Accordingly, measuring at least one time value expressing the duration of the state transitions of the supply equipment 120 allows the supply equipment 120 itself to be characterized, i.e., profiled and thus identified.

In addition to or as an alternative to the foregoing values, the profiling of the supply equipment 120 may be performed by measuring at least one time value expressing the time elapsed between two data packets transmitted or received by said supply equipment 120. In fact, such values of temporal durations between two data packets depend on the constructional characteristics of each supply equipment 120, such as the electrical components used and/or the implementation of the control processes of the supply equipment 120 itself and/or the technologies implementing the connections 121, such as the communication protocol employed. Consequently, the measurement of at least one time value expressing the time elapsed between two data packets transmitted or received by said supply equipment 120 allows to characterize, i.e., profile and thus identify the supply equipment 120 itself.

In addition to or as an alternative to the preceding values, the profiling of the supply equipment 120 may be performed by measuring at least one time offset value of at least one clock of the supply equipment 120. In particular, each supply equipment 120 may comprise a clock, which may be subject to clock skews, e.g., the clock may advance or delay the exact time by an amount of time that depends on the constructional features of the clock. Accordingly, measuring at least one time lag value of at least one clock of the supply equipment 120 allows the supply equipment 120 to be characterized, i.e., profiled and thus identified.

In addition to or as an alternative to the preceding values, to increase the accuracy of the method of the present invention, at least one energy value expressing the energy outputted by the supply equipment 120 may be measured. By comparing the energy outputted with the energy actually received by the vehicle 130, the supply equipment 120 can be identified.

In addition to or as an alternative to the preceding values, in order to increase the accuracy of the method of the present invention, at least one pair of coordinates relating to the geographical position of the supply equipment can be determined 120. By comparing these coordinates with the coordinates of the vehicle 130, it is possible to identify the supply equipment 120.

In accordance with the present invention, identification of the supply equipment 120 is accomplished by determining a set of first values and a set of second values that are comparable to each other. The first values and the second values may comprise at least one of the following values: at least one voltage value corresponding to the charging level of the supply equipment 120, at least one current value corresponding to the charging level of the supply equipment 120, at least one voltage value outputted by said supply equipment 120, at least one current value outputted by said supply equipment 120, at least one time value expressing the duration of state transitions of said supply equipment 120, at least one time value expressing the time elapsed between two data packets transmitted or received by said supply equipment 120, at least one time offset value of at least one clock of said supply equipment 120, at least one energy value expressing the energy outputted by said supply equipment 120, at least one pair of coordinates relative to the geographical position of said supply equipment 120.

In accordance with the method described in the present invention, all or a portion of such first values may be used as reference values for uniquely identifying the supply equipment 120. Such first values are predefined and relative to the supply equipment 120 and may be determined during an installation phase of the supply equipment 120 itself. For example, the operator managing the system 100, during the installation of each supply equipment 120, performs a profiling step, that is, a characterization of the supply equipment 120, obtaining the first predefined values that may be stored in the remote server 110 or distributed by various media, such as USB memories. The phase of determining the first values can be repeated over time, so as to take into account the wear and tear of the components of the supply equipment 120, consequently the new first determined values can be redistributed to the users of the system 100.

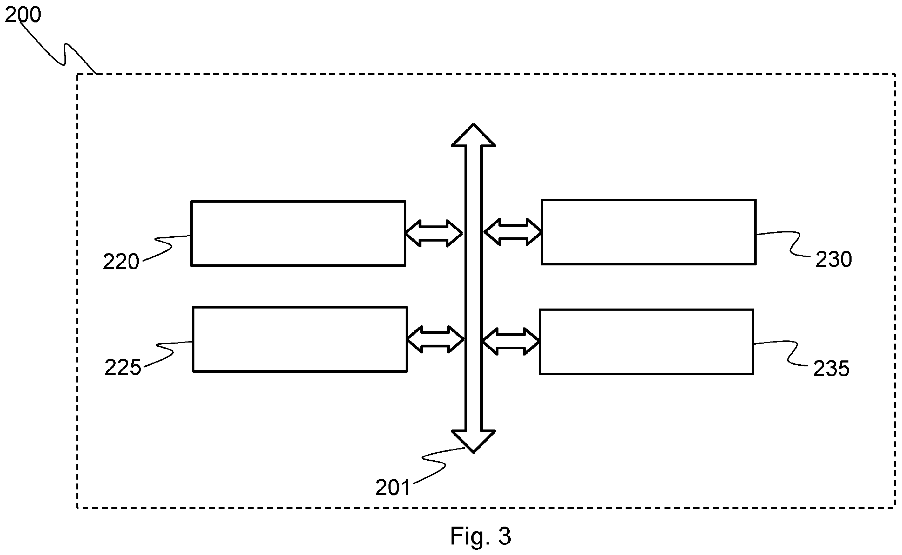

Figure 3 shows an example block diagram of the device 200 for identification of the supply equipment 120 adapted to charge the electric vehicle 130, or equivalently with reference to the example of Figure 2b, for identification of the first supply equipment 120a adapted to charge the first vehicle 130a. Said device 200 comprises processing means 235, storage means 230, communication means 225 and interfacing means 220; these may be operatively connected to each other by means of a communication bus 201.

The communication means 225 enable communication between the remote server 110 and the device 200 via a wireless connection. The communication means 225 may include, for example, a WiFi interface, an interface mobile network (GSM, UMTS, LTE, 5G), and so on. The device 200 is adapted to acquire from the remote server 110, by means of the communication means 225, the first values: said first values are predefined and related to the supply equipment 120. In accordance with the method described in the present invention, all or a portion of said first values may be used as reference values for uniquely identifying the supply equipment 120.

Said first values may be acquired based on an identification code of the supply equipment 120. For example, the user may forward a request to the remote server 110 through the device 200, for example by communicating the identification code located on or near the same supply equipment 120. Alternatively, the user may forward a request to the remote server 110 through another device, such as their smartphone. Alternatively or in addition to the identification code, first values may be acquired based on the position of the supply equipment 120. For example, the user may forward a request to the remote server 110 via the device 200, for example communicating the location of the device 200 itself confirming that this location does not exceed a predefined distance (e.g., 2 m) from the supply equipment 120. Alternatively, the user may forward a request to the remote server 110 via another device, such as its smartphone, for example, by communicating the location of the smartphone and the device 200 and confirming that the smartphone and the device 200 are within a predefined distance (e.g., 1 m) from the supply equipment 120.

In another embodiment of the invention, the device 200 is adapted to acquire from the remote server 110, by means of the communication means 225, all of the first sets of first values relating to a plurality of supply equipment 120, relating to at least one geographic area, for example an urban area, a district, and so on. In such a case, the device 200 is capable of selecting the first values relating to a specific supply equipment 120, located in said geographic area, based on the identification code of the specific supply equipment 120 and/or its location and in accordance with the foregoing.

The interfacing means 220 allow the device 200 to be operatively connected to said supply equipment 120 and to said electric vehicle 130, so as to access power and communication signals passing from the supply equipment 120 to the electric vehicle 130 and vice versa. The interfacing means 220 include a communication unit in accordance with a predefined communication protocol between the supply equipment 120 and the electric vehicle 130. Such a predefined communication protocol may be, for example, the ISO/IEC-15118 protocol. Alternatively or additionally, the device 200 may include one or more transceivers for accessing power and communication signals passing from the supply equipment 120 to the electric vehicle 130, and vice versa, in accordance with a wireless charging system, for example, in accordance with SAE-J2954 and SAE-J2847/6 specifications. The interfacing means 220 may include sensor means for determining at least one electrical voltage value and at least one electrical current value as input to the electric vehicle 130. In addition, the sensor means may include positioning means suitable for determining a position of said device 200 indoors and/or outdoors, such as a GPS module and/or a Visible Light Communication (VLC) module.

In addition, the interfacing means 220 allow the device 200 to acquire the second values that are representative of said supply equipment 120 during the process of charging of said electric vehicle 130. The second values may comprise at least one of the following values: at least one voltage value corresponding to a charging level of said supply equipment 120, at least one current value corresponding to a charging level of said supply equipment 120, at least one voltage value outputted by said supply equipment 120, at least one current value outputted by said supply equipment 120, at least one time value expressing the duration of state transitions of said supply equipment 120, at least one time value expressing the time elapsed between two data packets transmitted or received by said supply equipment 120, at least one time offset value of at least one clock of said supply equipment 120, at least one energy value expressing the energy outputted by said supply equipment 120, at least one pairs of coordinates relative to a geographic position of said supply equipment 120. In accordance with the method described in the present invention, all or a portion of said second values may be used as values for profiling, i.e., for uniquely identifying the supply equipment 120 during the process of charging of the electric vehicle 130.

In an embodiment of the invention, the device 200 may be external to the electric vehicle 130 and may comprise a first connector and a second connector. The first connector is operable to receive as input the output connector of the supply equipment 120, while the second connector is operable to be engaged in the refuelling connector of the electric vehicle 130. In such an embodiment, the interfacing means 220 may comprise input means and/or output means. The input means allow the user to provide commands to the device 200 and may include devices such as a keyboard, a touch panel, and so forth. The output means allow the user to display information output from the device 200 and may include a screen, a viewer, a speaker, an LED beacon, and so forth. The interfacing means 220 may further comprise a USB interface, an Ethernet interface, a Bluetooth interface, an NFC interface, and so on, to acquire information from other devices such as flash memories, smartphones, and so forth. Such information may include, for example, said first values, instructions for the device 200, and so on.

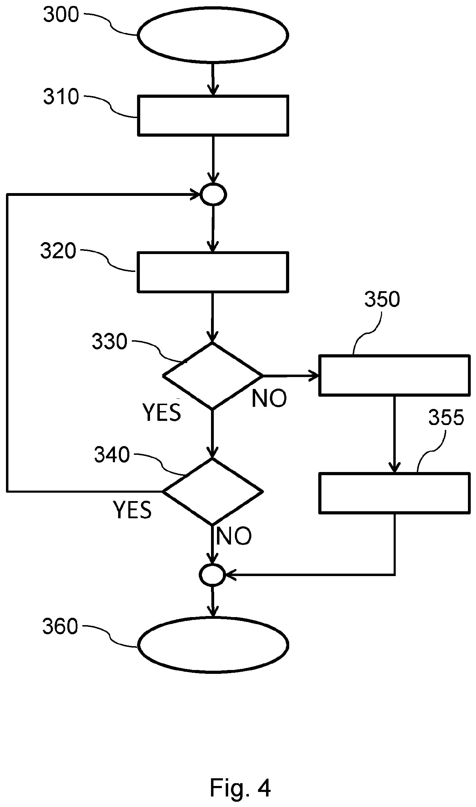

In another embodiment of the invention, the device 200 may be integrated into the electric vehicle 130. In such a case, the interfacing means 220 comprise all of the circuit elements necessary to dialogue with the systems integrated into the electric vehicle 130 itself, such as sensor means, positioning means, input means, output means of the vehicle itself, and so on. The storage media 230 allows the device 200 to store information and instructions according to the present embodiment of the invention, and may comprise, for example, a solid state flash type memory. Such information may comprise data from the remote server 110, such as first values and/or second values acquired via said interfacing means 220. Such first and second values may comprise at least one of: at least one voltage value corresponding to the charging level of the supply equipment 120, at least one current value corresponding to the charging level of the supply equipment 120, at least one voltage value outputted by said supply equipment 120, at least one value of current outputted by said supply equipment 120, at least one time value expressing the duration of state transitions of said supply equipment 120, at least one time value expressing the time elapsed between two data packets transmitted or received by said supply equipment 120, at least one time offset value of at least one clock of said supply equipment 120, at least one energy value expressing the energy outputted by said supply equipment 120, at least one pair of coordinates relating to the geographic position of said supply equipment 120. All or a portion of said first values and second values may be used for unique identification of said supply equipment 120, in accordance with the method described in the present invention. The instructions stored in the storage means 230, for implementing the method according to the invention, will be described in detail later with reference to the flowchart of Figure 4.

The processing means 235 enable the device 200 to process information and instructions stored in the storage means 230 and may include, for example, a multi-core ARM-type processor, an Arduino-type microcontroller, and so forth. The processing means 235 may operate in cooperation with the communication means 225, the interfacing means 220 and the storage means 230 via the communication bus 201. In accordance with the present invention, the device 200 is adapted to compare, by means of the processing means 235, first values with second values. Further, the processing means 235 enable the device 200 to generate at least one verification signal in the event that said first values are not compatible with said second values. And finally, the interfacing means 200 allow the device 200 to emit on output, i.e., they are capable of outputting at least one verification signal at the output of the device 200, wherein said verification signal has been generated.

With reference to Figure 4, a method for identification of a supply equipment 120 adapted to charge an electric vehicle 130 is described in accordance with the present embodiment of the invention.

At step 300, an initialization step is performed, wherein the device 200 is initialized. During this step, the device 200 is operationally connected to the supply equipment 120 and the electric vehicle 130 via the interfacing means 220. During this step, for example, the processing means 235 performs all operations necessary to activate the communication means 225, the interfacing means 220, and the storage means 230.

At step 310, a storing step is carried out in which the device 200 stores by means of the storing means 230 first values, said first values being predefined and related to said supply equipment 120. In accordance with the present method, all or a portion of said first values may be used as reference values for uniquely identifying the supply equipment 120. In accordance with the present invention, the first values may be received by the remote server 110 via communication means 225. Alternatively, the first values may be stored in the storage means 230 via the interfacing means 220, e.g., the first values may be downloaded from an external flash memory into the storage means 230 via the USB interface.

At step 320, an acquisition step is performed in which the device 200 acquires through the means of interface 220 the second values. Said second values are representative of the supply equipment 120 during the process of charging of the electric vehicle 130. In accordance with the method described in the present invention, all or a portion of the second values may be used as values for profiling, i.e., uniquely identifying the supply equipment 120 during the process of charging of the electric vehicle 130. The process of acquiring, i.e., measuring, the second values is independent of the information exchanged between the supply equipment 120 and the electric vehicle 130, which makes the process of profiling the supply equipment 120 advantageously immune to cyber attacks, such as relay attacks.

At step 330, a comparison step is performed, wherein the device 200 compares, employing the processing means 235, the first values with the second values, in particular the first values are compared with the corresponding second values. For example, the first voltage value corresponding to the charging level of the supply equipment 120, which is predefined, is compared with the second voltage value corresponding to the charging level of the supply equipment 120, which is acquired during the process of charging of the electric vehicle 130. All or a portion of such first values and corresponding second values may be used for unique identification of the supply equipment 120. The comparison may be made by verifying that each first value is equal to the corresponding second value, in which case the comparison is successful. In another embodiment of the invention, the comparison may be made by verifying that each second value is within a range of values centered on the corresponding first value. Such an interval of values may be determined based on a predefined tolerance.

The predefined tolerance may be expressed in terms of a percentage of the first value. For example, considering equal to 10A the first value (I1 = 10A), predefined, relative to the current outputted by the supply equipment 120 and further considering equal to 9A the corresponding second value (I2 = 9A) relative to the current outputted by the supply equipment 120, acquired during the process of charging of the electric vehicle 130. In case the predefined tolerance is equal to 20% of the first value (I1 = 10A), the range of values centered on the corresponding first value I1 results to be between eight and twelve amperes. In this case the second value (I2 = 9A) turns out to be included in this range, in accordance with what has been specified above, the comparison has a positive outcome. For both forms of realization, if the comparison has a positive outcome, the device performs step 340, alternatively it performs step 350.

At step 340, the device 200 verifies, by means of the processing means 235, whether energy exchange is taking place between the supply equipment 120 and the electric vehicle 130, for example to charge the vehicle itself. If so, the device 200 executes the step 320, otherwise it executes the step 360.

At step 350, a generation step is carried out, wherein the device 200 generates, by means of the processing means 235, at least one verification signal. Said verification signal is generated in case the first values are not comparable with the second values, as described in step 330.

At step 355, an output step is implemented, wherein the device 200 outputs, via the interfacing means 220, the generated verification signal. For example, The verification signal may include an audible and/or visual warning message which, in the case of interfacing means 220 comprise output means, such as a screen, may be emitted through the output means so that a user may be alerted to a misidentification of the supply equipment 120. In another embodiment of the invention, wherein the device 200 is integrated into the electric vehicle 130, the verification signal may be emitted by the output means of the electric vehicle 130 itself, such as turn signals, lights, horn of the electric vehicle 130. Alternatively or additionally, the verification signal may be transmitted to the remote server 110, via the communication means 225, which may transmit it back to the user's smartphone informing the user that the supply equipment 120 has not been identified. Subsequently, the device 200 performs the step 360.

At step 360, the device 200 performs a termination step in which all operations necessary to terminate the previous steps are performed. During this step, the device 200 may signal its inoperative state by, for example, indicator lights, such as LED indicators included in the device 200 itself. Subsequently, the device 200 may be disconnected from the supply equipment 120 and from the electric vehicle 130.

**In** one embodiment of the invention, the electric vehicle 130 may implement the device 200, e.g., the device 200 may be implemented via the OBU (On-Board Unit) of the vehicle.

**In** another embodiment of the invention, the above-described method may be implemented for example by means of a computer product suitable for being read by the device 200 or electric vehicle 130 comprising the device 200. The computer product, such as a CD, flash memory, may comprise a set of instructions that when loaded into the memory of the device 200, or by the electric vehicle 130 comprising the device 200, are suitable for implementing the method according to the present invention, such instructions may be coded in accordance with a programming language interpretable by the device 200 or from the electric vehicle 130 comprising the device 200.

Thus, the advantages of the present invention are apparent from the description given.

The method and the related device according to the present invention advantageously allow the identification of a supply equipment adapted to charge an electric vehicle by means of an unambiguous characterization of the supply equipment itself.

A further advantage of the present invention is to disclose a method, and related device, for identification of a supply equipment adapted to charge an electric vehicle by enabling protection from cyber attacks, such as relay attacks, as the unique characterization of the supply equipment is immune to such attacks.

Another advantage of the present invention is that it discloses a method and related device for identification of a supply equipment adapted to charge an electric vehicle, which do not need to modify the existing communication protocols between the electric vehicle and the supply equipment, since the unique characterization of the supply equipment does not require the information conveyed by such communication protocols.

A further advantage of the present invention is that to disclose a method and related device for identification of a supply equipment adapted to charge an electric vehicle, which does not require the use of encrypted communication protocols between the electric vehicle and the supply equipment, as the unique characterization of the supply equipment does not require the information conveyed by such communication protocols.

Of course, without prejudice to the principle of the invention, the forms of implementation and details of embodiment may be widely varied with respect to what has been described and illustrated by way of non-limiting example only, without thereby departing from the scope of protection of the present invention as defined by the appended claims.

## Claims

1. A method for identification of a supply equipment (120) adapted to charge an electric vehicle (130), said method comprising:
- an initialization phase, wherein a device (200) is operationally connected to said supply equipment (120) and to the electric vehicle (130) via interfacing means (220);
- a storage phase, wherein said device (200) stores first values into storage means (230), said first values being predefined and related to the supply equipment (120);
- an acquisition phase, wherein said device (200) acquires second values via interfacing means (220), said second values being representative of the supply equipment (120) during the process of charging said electric vehicle (130);
- a comparison phase, wherein said device (200) compares through processing means (235), said first values with the second values;
- a generation phase, wherein the device (200) generates, through said processing means (235), at least one verification signal in case said first values are not comparable with the second values, in accordance with said comparison phase;
- an output phase, wherein the device (200) outputs said at least one verification signal via said interfacing means (220) if said at least one verification signal has been generated, said method being **characterised in that** said interfacing means (220) comprise sensor means that determine at least one electrical voltage value and at least one electrical current value inputted to said electric vehicle (130) and **in that** said sensor means comprise positioning means that determine a position of said device (200) in indoor environments and/or in open environments.

2. Method according to claim 1, wherein said first values are received from a remote server (110) via communication means (225).

3. Method according to one or more of claims 1 to 2, wherein said interfacing means (220) comprises a communication unit compliant with a predefined protocol of communication between said supply equipment (120) and said electric vehicle (130).

4. Method according to one or more of claims 1 to 3, wherein said first and second values comprise at least one of the following values: at least one voltage value corresponding to a charge level of the supply equipment (120), at least one current value corresponding to a charge level of said supply equipment (120), at least one voltage value outputted by said supply equipment (120), at least one current value outputted by said supply equipment (120), at least one time value expressing the duration of the state transitions of said supply equipment (120), at least one time value expressing the time elapsed between two data packets transmitted or received by said supply equipment (120), at least one time offset value of at least one clock of said supply equipment (120), at least one energy value expressing the energy outputted by said supply equipment (120), at least one pair of coordinates of the geographic position of said supply equipment (120).

5. Method according to one or more of claims 1 to 4, wherein said first values are acquired on the basis of an identification code and/or the position of said supply equipment (120).

6. Device (200) for identification of a supply equipment (120) adapted to charge an electric vehicle (130), said device (200) comprising:
- interfacing means (220) to be operatively connected to said supply equipment (120) and to said electric vehicle (130), said interfacing means (220) being adapted to acquire second values, said second values being representative of said supply equipment (120) during the process of charging of the electric vehicle (130);
- storage means (230) for storing first values, said first values being predefined and concerning said supply equipment (120);
- processing means (235) for comparing said first values with said second values and generating at least one verification signal if the first values are not comparable with said second values,
said interfacing means (220) being adapted to output from the device (200) at least one verification signal if said at least one verification signal has been generated, said device (200) being **characterised in that** the interfacing means (220) comprise sensor means adapted to determine at least one electrical voltage value and at least one electrical current value inputted to said electric vehicle (130), and **in that** the sensor means comprise positioning means adapted to determine a position of said device (200) in indoor environments and/or in outdoor environments.

7. Device (200) according to claim 6, comprising communication means (225) adapted to receive said first values from a remote server (110).

8. Device (200) according to one or more of claims 6 to 7, wherein said interfacing means (220) comprise a communication unit compliant with a predefined protocol of communication between said supply equipment (120) and said electric vehicle (130).

9. Device (200) according to one or more of claims 6 to 8, wherein said first and second values comprise at least one of the following values: at least one voltage value corresponding to a charge level of said supply equipment (120), at least one current value corresponding to the charge level of said supply equipment (120), at least one voltage value outputted by said supply equipment (120), at least one current value outputted by said supply equipment (120), at least one time value expressing the duration of the state transitions of said supply equipment (120), at least one time value expressing the time elapse between two data packets transmitted or received by said supply equipment (120), at least one time offset value of at least one clock of said supply equipment (120), at least one energy value expressing the energy outputted by said supply equipment (120), at least one pair of coordinates of the geographic position of said supply equipment (120).

10. Device (200) according to one or more of claims 6 to 9, wherein the first values are acquired on the basis of an identification code and/or the position of said supply equipment (120).

11. Electric vehicle (130) adapted to be charged by a supply equipment (120), said electric vehicle (130) comprising a device (200) for identification of said supply equipment (120) in accordance with claims 6 to 10.

## Patentansprüche

1. Verfahren zur Identifizierung einer Versorgungseinrichtung (120), die zum Laden eines Elektrofahrzeugs (130) ausgelegt ist, wobei das Verfahren umfasst:
- eine Initialisierungsphase, in der eine Vorrichtung (200) über Schnittstellenmittel (220) betrieblich mit der Versorgungseinrichtung (120) und dem Elektrofahrzeug (130) verbunden wird;
- eine Speicherphase, in der die Vorrichtung (200) erste Werte in einer Speichereinrichtung (230) speichert, wobei die ersten Werte vordefiniert sind und sich auf die Versorgungseinrichtung (120) beziehen;
- eine Erfassungsphase, in der die Vorrichtung (200) über Schnittstellenmittel (220) zweite Werte erfasst, wobei die zweiten Werte für die Versorgungseinrichtung (120) während des Ladevorgangs des Elektrofahrzeugs (130) repräsentativ sind;
- eine Vergleichsphase, in der die Vorrichtung (200) über Verarbeitungsmittel (235) die ersten Werte mit den zweiten Werten vergleicht;
- eine Erzeugungsphase, in der die Vorrichtung (200) mit den Verarbeitungsmitteln (235) mindestens ein Verifizierungssignal erzeugt, falls die ersten Werte gemäß der Vergleichsphase nicht mit den zweiten Werten vergleichbar sind;
- eine Ausgabephase, in der die Vorrichtung (200) das mindestens eine Verifizierungssignal über die Schnittstellenmittel (220) ausgibt, wenn das mindestens eine Verifizierungssignal erzeugt wurde, wobei das Verfahren **dadurch gekennzeichnet ist, dass** die Schnittstellenmittel (220) Sensormittel umfassen, die mindestens einen elektrischen Spannungswert und mindestens einen elektrischen Stromwert bestimmen, die in das Elektrofahrzeug (130) eingegeben werden, und dass die Sensormittel Positionierungsmittel umfassen, die eine Position der Vorrichtung (200) in Innenräumen und/oder im Freien bestimmen.

2. Verfahren nach Anspruch 1, wobei die ersten Werte von einem Remote-Server (110) über Kommunikationsmittel (225) empfangen werden.

3. Verfahren nach einem oder mehreren der Ansprüche 1 bis 2, wobei die Schnittstellenmittel (220) eine Kommunikationseinheit umfassen, die einem vordefinierten Kommunikationsprotokoll zwischen der Versorgungseinrichtung (120) und dem Elektrofahrzeug (130) entspricht.

4. Verfahren gemäß einem oder mehreren der Ansprüche 1 bis 3, wobei der erste und der zweite Wert mindestens einen der folgenden Werte umfassen: mindestens einen Spannungswert, der einem Ladezustand der Versorgungseinrichtung (120) entspricht, mindestens einen Stromwert, der einem Ladezustand der Versorgungseinrichtung (120) entspricht, mindestens einen von der Versorgungseinrichtung (120) ausgegebenen Spannungswert, mindestens einen von der Versorgungseinrichtung (120) ausgegebenen Stromwert, mindestens einen Zeitwert, der die Dauer der Zustandsübergänge der Versorgungseinrichtung (120) ausdrückt, mindestens einen Zeitwert, der die zwischen zwei von der Versorgungseinrichtung (120) gesendeten oder empfangenen Datenpaketen verstrichene Zeit ausdrückt, mindestens einen Zeitversatzwert mindestens eines Taktgebers der Versorgungseinrichtung (120), mindestens einen Energiewert, der die von der Versorgungseinrichtung (120) ausgegebene Energie ausdrückt, mindestens ein Koordinatenpaar der geografischen Position der Versorgungseinrichtung (120).

5. Verfahren nach einem oder mehreren der Ansprüche 1 bis 4, wobei die ersten Werte auf der Grundlage eines Identifikationscodes und/oder der Position der Versorgungseinrichtung (120) erfasst werden.

6. Vorrichtung (200) zur Identifizierung einer Versorgungseinrichtung (120), die zum Laden eines Elektrofahrzeugs (130) ausgelegt ist, wobei die Vorrichtung (200) umfasst:
- Schnittstellenmittel (220), die betrieblich mit der Versorgungseinrichtung (120) und dem Elektrofahrzeug (130) verbunden werden können, wobei die Schnittstellenmittel (220) dazu ausgelegt sind, zweite Werte zu erfassen, wobei die zweiten Werte für die Versorgungseinrichtung (120) während des Ladevorgangs des Elektrofahrzeugs (130) repräsentativ sind;
- Speichermittel (230) zum Speichern erster Werte, wobei die ersten Werte vordefiniert sind und sich auf die Versorgungseinrichtung (120) beziehen;
- Verarbeitungsmittel (235) zum Vergleichen der ersten Werte mit den zweiten Werten und zum Erzeugen mindestens eines Verifizierungssignals, wenn die ersten Werte nicht mit den zweiten Werten vergleichbar sind,
wobei die Schnittstellenmittel (220) dazu ausgelegt sind, mindestens ein Verifizierungssignal aus der Vorrichtung (200) auszugeben, wenn das mindestens eine Verifizierungssignal erzeugt wurde, wobei die Vorrichtung (200) **dadurch gekennzeichnet ist, dass** die Schnittstellenmittel (220) Sensoreinrichtungen umfassen, die dazu ausgelegt sind, mindestens einen elektrischen Spannungswert und mindestens einen elektrischen Stromwert zu bestimmen, die in das Elektrofahrzeug (130) eingespeist werden, und dass die Sensoreinrichtungen Positionierungsmittel umfassen, die dazu ausgelegt sind, eine Position der Vorrichtung (200) in Innenräumen und/oder im Freien zu bestimmen.

7. Vorrichtung (200) gemäß Anspruch 6, mit Kommunikationsmitteln (225), die dazu ausgelegt sind, die ersten Werte von einem Remote-Server (110) zu empfangen.

8. Vorrichtung (200) gemäß einem oder mehreren der Ansprüche 6 bis 7, wobei die Schnittstellenmittel (220) eine Kommunikationseinheit umfassen, die einem vordefinierten Kommunikationsprotokoll zwischen der Versorgungseinrichtung (120) und dem Elektrofahrzeug (130) entspricht.

9. Vorrichtung (200) gemäß einem oder mehreren der Ansprüche 6 bis 8, wobei der erste und der zweite Wert mindestens einen der folgenden Werte umfassen: mindestens einen Spannungswert, der einem Ladezustand der Versorgungseinrichtung (120) entspricht, mindestens einen Stromwert, der dem Ladezustand der Versorgungseinrichtung (120) entspricht, mindestens einen von der Versorgungseinrichtung (120) ausgegebenen Spannungswert, mindestens einen von der Versorgungseinrichtung (120) ausgegebenen Stromwert, mindestens einen Zeitwert, der die Dauer der Zustandsübergänge der Versorgungseinrichtung (120) ausdrückt, mindestens einen Zeitwert, der die Zeitdauer zwischen zwei von der Versorgungseinrichtung (120) gesendeten oder empfangenen Datenpaketen ausdrückt, mindestens einen Zeitversatzwert mindestens eines Taktgebers der Versorgungseinrichtung (120), mindestens einen Energiewert, der die von der Versorgungseinrichtung (120) ausgegebene Energie ausdrückt, mindestens ein Koordinatenpaar der geografischen Position der Versorgungseinrichtung (120).

10. Vorrichtung (200) gemäß einem oder mehreren der Ansprüche 6 bis 9, wobei die ersten Werte auf der Grundlage eines Identifikationscodes und/oder der Position der Versorgungseinrichtung (120) erfasst werden.

11. Elektrofahrzeug (130), das zum Laden durch eine Versorgungsvorrichtung (120) ausgelegt ist, wobei das Elektrofahrzeug (130) eine Vorrichtung (200) zur Identifizierung der Versorgungsvorrichtung (120) gemäß den Ansprüchen 6 bis 10 umfasst.

## Revendications

1. - Procédé d'identification d'un équipement d'alimentation (120) apte à charger un véhicule électrique (130), ledit procédé comprenant :
- une phase d'initialisation, dans laquelle un dispositif (200) est relié de manière fonctionnelle audit équipement d'alimentation (120) et au véhicule électrique (130) par l'intermédiaire de moyens d'interfaçage (220) ;
- une phase de stockage, dans laquelle ledit dispositif (200) stocke des premières valeurs dans des moyens de stockage (230), lesdites premières valeurs étant prédéfinies et associées à l'équipement d'alimentation (120) ;
- une phase d'acquisition, dans laquelle ledit dispositif (200) acquiert des secondes valeurs par l'intermédiaire de moyens d'interfaçage (220), lesdites secondes valeurs étant représentatives de l'équipement d'alimentation (120) pendant le processus de charge dudit véhicule électrique (130) ;
- une phase de comparaison, dans laquelle ledit dispositif (200) compare, par l'intermédiaire de moyens de traitement (235), lesdites premières valeurs aux secondes valeurs ;
- une phase de génération, dans laquelle le dispositif (200) génère, par l'intermédiaire desdits moyens de traitement (235), au moins un signal de vérification dans le cas où lesdites premières valeurs ne sont pas comparables aux secondes valeurs, conformément à ladite phase de comparaison ;
- une phase de sortie, dans laquelle le dispositif (200) émet ledit au moins un signal de vérification par l'intermédiaire desdits moyens d'interfaçage (220) si ledit au moins un signal de vérification a été généré,
ledit procédé étant **caractérisé par le fait que** lesdits moyens d'interfaçage (220) comprennent des moyens capteurs qui déterminent au moins une valeur de tension électrique et au moins une valeur de courant électrique entrées dans ledit véhicule électrique (130), et **par le fait que** lesdits moyens capteurs comprennent des moyens de positionnement qui déterminent une position dudit dispositif (200) dans des environnements intérieurs et/ou dans des environnements ouverts.

2. - Procédé selon la revendication 1, dans lequel lesdites premières valeurs sont reçues en provenance d'un serveur à distance (110) par l'intermédiaire de moyens de communication (225).

3. - Procédé selon l'une ou plusieurs des revendications 1 à 2, dans lequel lesdits moyens d'interfaçage (220) comprennent une unité de communication conforme à un protocole prédéfini de communication entre ledit équipement d'alimentation (120) et ledit véhicule électrique (130).

4. - Procédé selon l'une ou plusieurs des revendications 1 à 3, dans lequel lesdites premières et secondes valeurs comprennent au moins l'une des valeurs suivantes : au moins une valeur de tension correspondant à un niveau de charge de l'équipement d'alimentation (120), au moins une valeur de courant correspondant à un niveau de charge dudit équipement d'alimentation (120), au moins une valeur de tension émise par ledit équipement d'alimentation (120), au moins une valeur de courant émise par ledit équipement d'alimentation (120), au moins une valeur de temps exprimant la durée des transitions d'état dudit équipement d'alimentation (120), au moins une valeur de temps exprimant le temps écoulé entre deux paquets de données transmis ou reçus par ledit équipement d'alimentation (120), au moins une valeur de décalage de temps d'au moins une horloge dudit équipement d'alimentation (120), au moins une valeur d'énergie exprimant l'énergie émise par ledit équipement d'alimentation (120), au moins une paire de coordonnées de la position géographique dudit équipement d'alimentation (120).

5. - Procédé selon l'une ou plusieurs des revendications 1 à 4, dans lequel lesdites premières valeurs sont acquises sur la base d'un code d'identification et/ou de la position dudit équipement d'alimentation (120).

6. - Dispositif (200) d'identification d'un équipement d'alimentation (120) apte à charger un véhicule électrique (130), ledit dispositif (200) comprenant :
- des moyens d'interfaçage (220) destinés à être reliés de manière fonctionnelle audit équipement d'alimentation (120) et audit véhicule électrique (130), lesdits moyens d'interfaçage (220) étant aptes à acquérir des secondes valeurs, lesdites secondes valeurs étant représentatives dudit équipement d'alimentation (120) pendant le processus de charge du véhicule électrique (130) ;
- des moyens de stockage (230) pour stocker des premières valeurs, lesdites premières valeurs étant prédéfinies et concernant ledit équipement d'alimentation (120) ;
- des moyens de traitement (235) pour comparer lesdites premières valeurs auxdites secondes valeurs et générer au moins un signal de vérification si les premières valeurs ne sont pas comparables auxdites secondes valeurs,
lesdits moyens d'interfaçage (220) étant aptes à émettre à partir du dispositif (200) au moins un signal de vérification si ledit au moins un signal de vérification a été généré, ledit dispositif (200) étant **caractérisé par le fait que** les moyens d'interfaçage (220) comprennent des moyens capteurs aptes à déterminer au moins une valeur de tension électrique et au moins une valeur de courant électrique entrées dans ledit véhicule électrique (130), et **par le fait que** les moyens capteurs comprennent des moyens de positionnement aptes à déterminer une position dudit dispositif (200) dans des environnements intérieurs et/ou dans des environnements extérieurs.

7. - Dispositif (200) selon la revendication 6, comprenant des moyens de communication (225) aptes à recevoir lesdites premières valeurs en provenance d'un serveur à distance (110).

8. - Dispositif (200) selon l'une ou plusieurs des revendications 6 à 7, dans lequel lesdits moyens d'interfaçage (220) comprennent une unité de communication conforme à un protocole prédéfini de communication entre ledit équipement d'alimentation (120) et ledit véhicule électrique (130).

9. - Dispositif (200) selon l'une ou plusieurs des revendications 6 à 8, dans lequel lesdites premières et secondes valeurs comprennent au moins l'une des valeurs suivantes : au moins une valeur de tension correspondant à un niveau de charge dudit équipement d'alimentation (120), au moins une valeur de courant correspondant au niveau de charge dudit équipement d'alimentation (120), au moins une valeur de tension émise par ledit équipement d'alimentation (120), au moins une valeur de courant émise par ledit équipement d'alimentation (120), au moins une valeur de temps exprimant la durée des transitions d'état dudit équipement d'alimentation (120), au moins une valeur de temps exprimant le temps écoulé entre deux paquets de données transmis ou reçus par ledit équipement d'alimentation (120), au moins une valeur de décalage de temps d'au moins une horloge dudit équipement d'alimentation (120), au moins une valeur d'énergie exprimant l'énergie émise par ledit équipement d'alimentation (120), au moins une paire de coordonnées de la position géographique dudit équipement d'alimentation (120).

10. - Dispositif (200) selon l'une ou plusieurs des revendications 6 à 9, dans lequel les premières valeurs sont acquises sur la base d'un code d'identification et/ou de la position dudit équipement d'alimentation (120).

11. - Véhicule électrique (130) apte à être chargé par un équipement d'alimentation (120), ledit véhicule électrique (130) comprenant un dispositif (200) d'identification dudit équipement d'alimentation (120) selon les revendications 6 à 10.
